# DEMANDE DE BREVET EUROPEEN

(11) **EP 1 655 178 A1**
(43) Date de publication de la demande: **10.05.2006**
(21) Numéro de dépôt: 05292319.0
(22) Date de dépôt: 02.11.2005
(51) Int. Cl.: B60R 13/08, B62D 25/16, G10K 11/16

(54) **Pièce d'équipement de véhicule automobile ayant des caractéristiques d'absorption acoustique, son procédé de fabrication, et application à un pareboue**

(30) Priorité: 05.11.2004 FR 0411832; 05.11.2004 FR 0411833
(71) Demandeur: Peugeot Citroen Automobiles SA, 78140 Vélizy Villacoublay (FR)
(72) Inventeur: Besson, Jack, 78200 Mantes la Jolie (FR)
(74) Mandataire: Habasque, Etienne J. Jean-François

(57) **Abrégé**

Cette pièce comporte paroi (3) formée avec une pluralité de micro-perforations prévues pour assurer une absorption acoustique, et avec une pluralité de reliefs tronconiques (13) présentant chacun l'une desdites micro-perforations à son sommet.

L'invention vise également le procédé de fabrication d'une telle pièce d'équipement.

Application à un pare-boue de véhicule.

## Description

La présente invention concerne, selon un premier aspect, une pièce d'équipement de véhicule automobile, comportant une paroi formée avec une pluralité de micro-perforations prévues pour assurer une absorption acoustique.

On a déjà proposé, dans l'état de la technique, de doter certaines pièces d'équipement intérieur, dans lesquelles sont formés des canaux d'écoulement d'air, de parois micro-perforées. Les micro-perforations ont des dimensions et sont réparties sur la paroi de façon à absorber les vibrations acoustiques dans un certain domaine de fréquence, et ainsi empêcher la propagation des bruits par les conduits d'air vers l'intérieur de l'habitacle.

Pour être efficaces, les perforations doivent avoir des dimensions extrêmement précises, conformes aux dimensions calculées par une absorption optimale dans la gamme de fréquence désirée.

Généralement, les perforations sont réalisées par une opération de perçage, qui est nécessairement de grande précision, à partir de la paroi pleine. Cette opération de perçage est extrêmement pénalisante du point de vue du temps de fabrication et des outillages à mettre en oeuvre. Elle est par conséquent pénalisante du point de vue du coût global de fabrication.

L'invention a pour but de résoudre cet inconvénient.

A cet effet, l'invention a pour objet, selon le premier aspect, une pièce d'équipement du type précédemment décrit, caractérisée en ce que la paroi est formée avec une pluralité de reliefs tronconiques présentant chacun l'une desdites micro-perforations à son sommet.

Suivant d'autres caractéristiques d'une pièce d'équipement selon l'invention, prises seules ou selon toutes les combinaisons techniquement envisageables :
- les reliefs tronconiques micro-perforés ont une base circulaire ;
- les reliefs tronconiques micro-perforés ont une base ovale ;
- les reliefs tronconiques micro-perforés ont une base polygonale, notamment une base étoilée ;
- la paroi est formée en outre avec des pointes coniques creuses ayant une forme dont la forme tronconique des reliefs est une troncature ;
- la paroi est réalisée en matière plastique ; et
- la plus grande dimension des micro-perforations est comprise entre 100 et 200 µm.

L'invention vise également un procédé de fabrication d'une pièce d'équipement telle que définie précédemment. Dans ce procédé, on réalise successivement les opérations suivantes :
- on fabrique une ébauche de la paroi par moulage, ladite ébauche présentant une série de pointes coniques creuses, et
- on tronque une pluralité de pointes coniques parmi ladite série, à une hauteur prédéterminée de leur base, de façon à former les micro-perforations et ainsi obtenir ladite paroi.

De préférence, le moulage de l'ébauche est réalisé par soufflage ou par injection de matière plastique.

De préférence encore, la troncature des pointes est réalisée par sciage ou par meulage.

Selon un deuxième aspect, l'invention concerne un pare-boue de véhicule automobile, comprenant une paroi concave et une pièce de fermeture solidaires, formant entre elles un canal de circulation d'air.

On a remarqué que les pare-boue étaient le siège de phénomènes vibratoires à l'origine du passage de bruits depuis l'extérieur du véhicule vers l'habitacle.

L'invention a pour but d'améliorer l'isolation acoustique de l'habitacle vis-à-vis de l'extérieur, au niveau des roues du véhicule.

A cet effet, l'invention a pour objet, selon le deuxième aspect, un pare-boue du type exposé ci-dessus, dans lequel la paroi concave est formée avec une pluralité de micro-perforations prévues pour assurer une absorption acoustique.

Suivant d'autres caractéristiques d'un pare-boue selon l'invention, prises seules ou selon toutes les combinaisons envisageables :
- ladite paroi concave est formée avec une pluralité de reliefs tronconiques présentant chacun l'une desdites micro-perforations à son sommet ;
- la paroi concave est formée avec des pointes coniques creuses en saillie, les pointes ayant une forme dont la forme tronconique des reliefs est une troncature ;
- les reliefs tronconiques micro-perforés ont une base circulaire, ovale, ou polygonale, notamment une base étoilée ;
- le pare-boue comprend une pièce concave de couverture, emboîtée et fixée sur la paroi concave, la pièce de couverture étant réalisée dans une mousse prévue pour assurer une isolation acoustique ;
- la pièce de couverture est en appui sur les pointes coniques ;
- la paroi concave est réalisée en matière plastique ; et
- la plus grande dimension des micro-perforations est comprise entre 100 et 200 µm.

Des formes particulières de réalisation de l'invention vont maintenant être décrites plus en détail, en référence aux dessins annexés sur lesquels :
- la Figure 1 est une vue schématique en perspective d'un pare-boue de véhicule automobile, conforme à l'invention ;
- la Figure 2 est une vue en perspective éclatée du pare-boue de la Figure 1 ;
- la Figure 3 est une vue partielle en coupe, à plus grande échelle, du pare-boue de la Figure 1 selon la direction 3-3 ;
- la Figure 4 est une vue agrandie en coupe d'un relief tronconique d'une pièce conforme à l'invention ;
- la Figure 5 est une vue schématique en perspective d'une ébauche moulée, à partir de laquelle est formée une paroi perforée d'une pièce conforme à l'invention ; et
- les Figures 6 et 7 sont des vues de dessus du relief de la Figure 5, illustrant différentes formes possibles de ces reliefs.

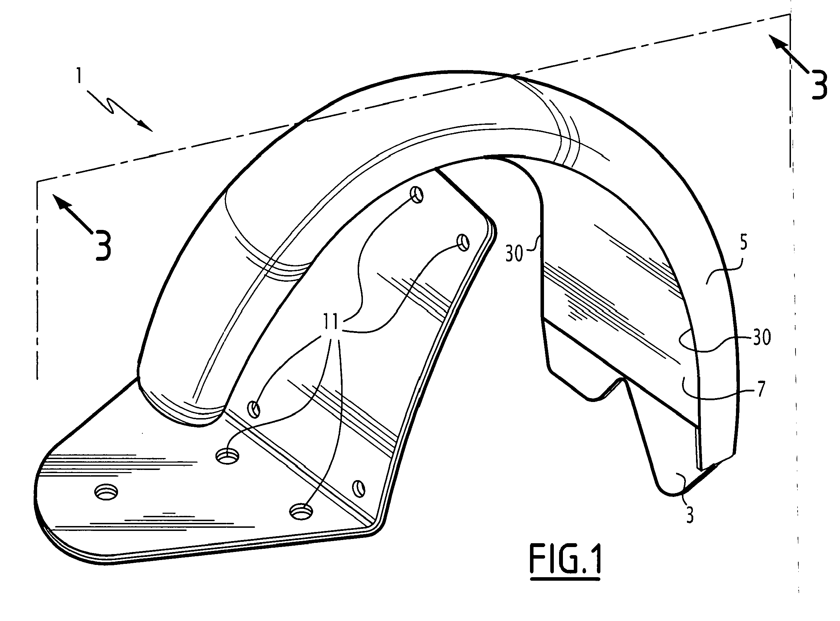

Sur les Figures 1 à 3, on a représenté une pièce d'équipement de véhicule automobile selon une forme particulière de réalisation de l'invention.

Cette pièce est constituée d'un pare-boue 1, comprenant essentiellement une paroi concave 3 perforée, une pièce concave 5 de couverture, de forme correspondante, et une pièce de fermeture 7.

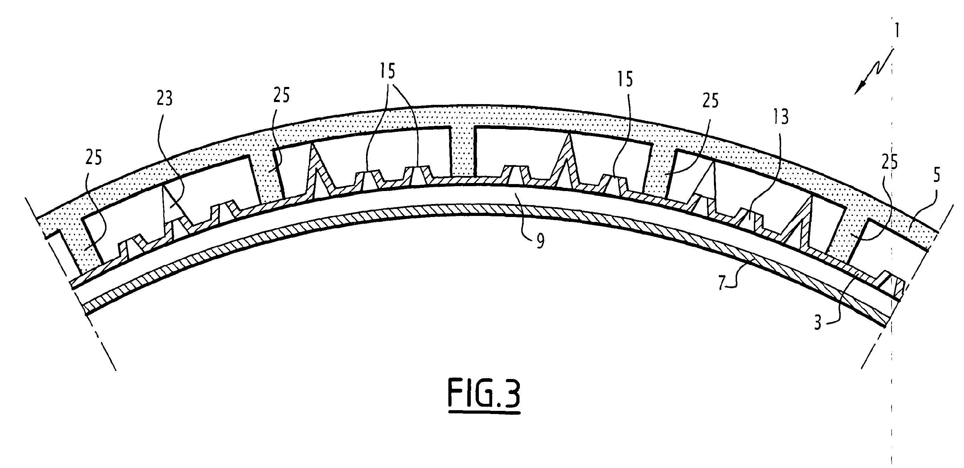

En configuration assemblée, telle que représentée sur les Figures 1 et 3, la paroi concave 3 est emboîtée dans la pièce de couverture 5, et fixée à cette dernière. La pièce de fermeture 7 est fixée sur la face intérieure de la paroi concave 3, en délimitant avec elle un canal 9 de circulation d'air.

La fixation de la paroi concave 3, de la pièce de couverture 5, et de la pièce de fermeture 7, entre elles, est réalisée par tout moyen adapté qui ne sera pas décrit ici.

Le pare-boue 1 ainsi assemblé comporte une pluralité de trous 11, ou plus généralement d'organes de fixation, servant à fixer le pare-boue sur la caisse du véhicule.

Le pare-boue 1 présente une forme générale incurvée prévue pour entourer partiellement une roue du véhicule, lorsque le pare-boue est fixé sur la caisse.

Dans tout ce qui suit, les termes « interne » et « externe » s'entendront par rapport à la courbure générale de la pièce, les faces internes d'une pièce étant celles tournées vers la roue.

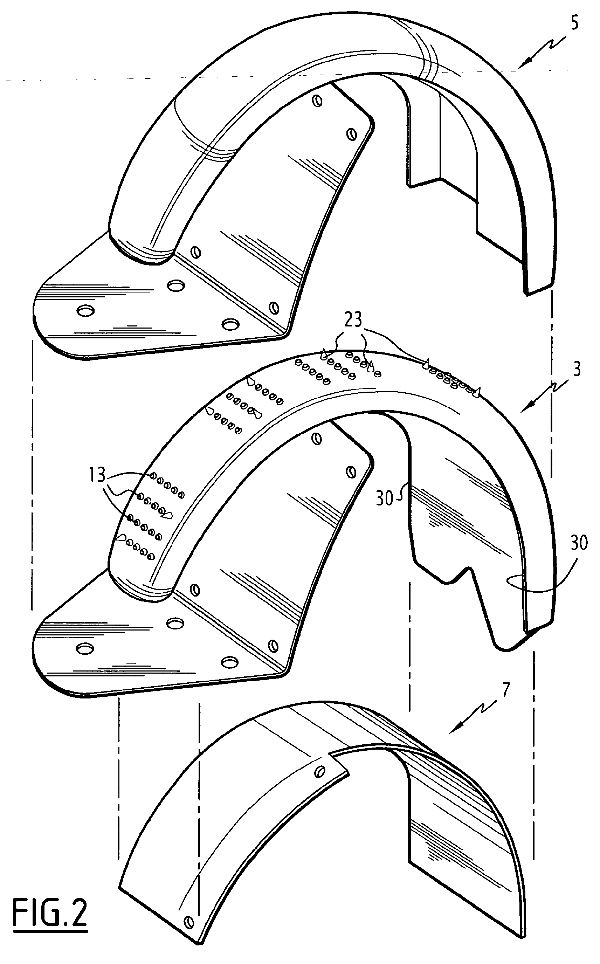

La paroi concave 3, comme cela est visible sur la Figure 2, est formée, sur sa face externe, avec une pluralité de reliefs 13 tronconiques et creux.

Les reliefs tronconiques 13 sont perforés à leur base supérieure, c'est-à-dire à leur sommet. Les perforations 15 des reliefs 13 sont des « micro-perforations » dans la mesure où leur plus grande dimension (leur diamètre dans le cas de perforations circulaires) est de l'ordre de la centaine de microns (µm), notamment comprise entre 100 et 200 microns. Ces perforations 15 établissent une communication entre le canal 9 et l'espace compris entre la paroi concave 3 et la pièce de couverture 5, les reliefs étant tournés vers l'extérieur du canal 9 et effilés dans cette direction.

La géométrie des reliefs 13, leur répartition sur la paroi concave 3, et la dimension des micro-perforations 15, sont choisies de façon que le pare-boue 1 assure une isolation acoustique entre la région périphérique de la roue et la caisse du véhicule. En d'autres termes, les micro-perforations 13 assurent une absorption des ondes acoustiques transitant dans le canal 9.

Dans l'exemple représenté, les reliefs micro-perforés 15 sont tous identiques et agencés selon une pluralité de lignes parallèles.

Dans d'autres formes de réalisation, ces reliefs peuvent être de formes et/ou de dimensions différentes les uns par rapport aux autres. Leur implantation peut également être différente de la disposition en lignes, selon les caractéristiques d'absorption à obtenir, par exemple en quinconce.

Comme cela est visible sur la Figure 3, la paroi concave 3 est formée extérieurement avec des pointes coniques 23, en saillie vers l'extérieur du canal 9, de la même façon que les reliefs tronconiques 13.

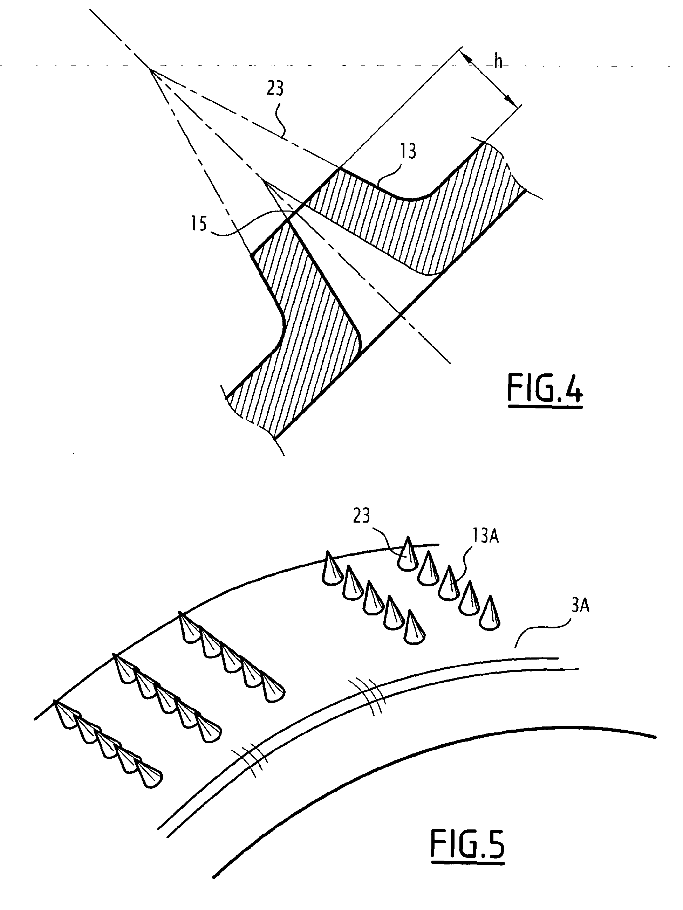

La forme des reliefs tronconiques 13 est, dans l'exemple représenté, une troncature de la forme des pointes coniques 23. Cela a été illustré sur la vue en coupe de la Figure 4, montrant en traits mixtes la pointe conique 23, et en traits pleins le relief tronconique 13, ainsi que la micro-perforation 15 du relief 13, obtenue par troncature de la pointe.

La paroi concave 3 est réalisée de préférence en matière plastique, selon le procédé ci-après.

Dans un premier temps, on fabrique une ébauche 3A de la paroi 3, notamment par un procédé de moulage par soufflage ou par injection.

L'ébauche 3A a été représentée sur la Figure 5, et présente la même forme générale que la paroi concave 3 à obtenir. L'ébauche 3A est formée avec un ensemble de pointes coniques 13A, 23, dont un certain nombre 13A sont prévues pour être tronquées, et ainsi constituer les reliefs tronconiques 13. Les autres pointes 23 de l'ensemble devant rester intactes pour former les appuis de la pièce de couverture 5.

Dans un deuxième temps, on tronque les pointes 13A à une hauteur h prédéterminée de leur base, comme illustré sur la Figure 4, de façon à former une micro-perforation 15 centrale dans le relief 13. Cette opération de troncature des pointes 13A est réalisée par sciage ou par meulage.

La troncature des pointes est réalisée soit à chaud, la pièce sortant du moule, soit à froid sur une pièce stockée et reprise.

A la suite de cette opération, on obtient la paroi concave 3 munie des pointes coniques 23 et des reliefs tronconiques 13, telle que représentée sur les Figures 2 et 3.

En se référant à nouveau à la Figure 3, on verra que la pièce de couverture 5 est munie sur sa surface interne de nervures 25 prenant appui, en configuration assemblée du pare-boue 1, sur la face externe de la paroi concave 3.

De préférence, la pièce de couverture 5 qui est emboîtée et fixée, en appui par les nervures 25 et les pointes coniques 23, sur la paroi concave 3, est réalisée dans une mousse prévue pour assurer une isolation acoustique.

Quant à la pièce de fermeture 7, elle peut être réalisée en matière plastique. Elle est fixée sur la paroi concave 3, en appui sur des rebords 30 de cette dernière, de façon à ménager entre la pièce de fermeture 7 et la paroi concave 3, le canal 9 de passage d'air avec une section transversale fermée sur toute la longueur du canal 9.

On comprend qu'une grande précision dans les dimensions des perforations 15 peut être obtenue avec des moyens d'usinage relativement simples, qui garantissent un temps d'opération relativement court et une grande reproductibilité.

Les dimensions des pointes 13A, y compris celles de l'évidement central, étant obtenues avec une grande précision par l'opération de moulage, il suffit pour maîtriser parfaitement la dimension des perforations 15, de maîtriser la hauteur h à laquelle est réalisée la troncature. La maîtrise de cette hauteur h est assurée de façon relativement simple avec des opérations d'usinage classiques (meulage, sciage, etc...).

Les reliefs tronconiques 13 peuvent avoir une base circulaire et, de façon correspondante, une perforation 15 circulaire, comme cela a été représenté sur les Figures 2 et 5 notamment.

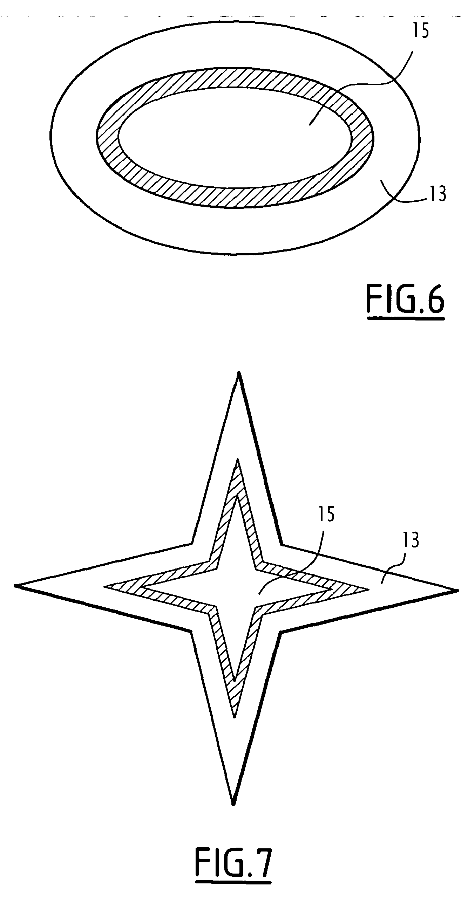

Les reliefs tronconiques peuvent également avoir une base de forme différente, comme cela a été illustré sur les Figures 6 et 7, et en particulier une base ovale ou elliptique (Figure 6), ou une base polygonale qui peut être par exemple étoilée (Figure 7).

Certaines zones de la paroi pourraient être dotées de reliefs d'une certaine forme, par exemple de section circulaire, tandis que d'autres zones seraient dotées de reliefs d'une autre forme, par exemple de section ovale.

## Revendications

1. Pièce d'équipement de véhicule automobile, comportant une paroi (3) formée avec une pluralité de micro-perforations (15) prévues pour assurer une absorption acoustique, **caractérisée en ce que** la paroi (3) est formée avec une pluralité de reliefs tronconiques (13) présentant chacun l'une desdites micro-perforations (15) à son sommet.

2. Pièce d'équipement suivant la revendication 1, **caractérisée en ce que** les reliefs tronconiques micro-perforés (13) ont une base circulaire.

3. Pièce d'équipement suivant la revendication 1, **caractérisée en ce que** les reliefs tronconiques micro-perforés (13) ont une base ovale.

4. Pièce d'équipement suivant la revendication 1, **caractérisée en ce que** les reliefs tronconiques micro-perforés (13) ont une base polygonale, notamment une base étoilée.

5. Pièce d'équipement suivant l'une quelconque des revendications 1 à 4, **caractérisée en ce que** la paroi (3) est formée en outre avec des pointes coniques creuses (23) ayant une forme dont la forme tronconique des reliefs (13) est une troncature.

6. Pièce d'équipement suivant l'une quelconque des revendications 1 à 5, **caractérisée en ce que** la paroi (3) est réalisée en matière plastique.

7. Pièce d'équipement suivant l'une quelconque des revendications 1 à 6, **caractérisée en ce que** la plus grande dimension des micro-perforations (15) est comprise entre 100 et 200 *µ*m.

8. Procédé de fabrication d'une pièce d'équipement suivant l'une quelconque des revendications 1 à 7, dans lequel on réalise successivement les opérations suivantes :
- on fabrique une ébauche de la paroi (3) par moulage, ladite ébauche (3A) présentant une série de pointes coniques (13A, 23) creuses, et
- on tronque une pluralité de pointes coniques (13A) parmi ladite série, à une hauteur prédéterminée (h) de leur base, de façon à former les micro-perforations (15) et ainsi obtenir ladite paroi (3).

9. Procédé suivant la revendication 8, dans lequel le moulage de l'ébauche (3A) est réalisé par soufflage ou par injection de matière plastique.

10. Procédé suivant la revendication 8 ou 9,
**caractérisé en ce que** la troncature des pointes (13A) est réalisée par sciage ou par meulage.

11. Pare-boue de véhicule automobile, comprenant une paroi concave (3) et une pièce de fermeture (7) solidaires, formant entre elles un canal (9) de circulation d'air, **caractérisé en ce que** ladite paroi concave (3) est formée avec une pluralité de micro-perforations (15) prévues pour assurer une absorption acoustique.

12. Pare-boue suivant la revendication 11,
**caractérisé en ce que** ladite paroi concave (3) est formée avec une pluralité de reliefs tronconiques (13) présentant chacun l'une desdites micro-perforations (15) à son sommet.

13. Pare-boue suivant la revendication 11 ou 12, **caractérisé en ce que** la paroi concave (3) est formée avec des pointes coniques creuses (23) en saillie, les pointes (23) ayant une forme dont la forme tronconique des reliefs (13) est une troncature.

14. Pare-boue suivant la revendication 12 ou 13, **caractérisé en ce que** les reliefs tronconiques micro-perforés (13) ont une base circulaire, ovale, ou polygonale, notamment une base étoilée.

15. Pare-boue suivant l'une quelconque des revendications 11 à 14, **caractérisé en ce qu'**il comprend une pièce concave de couverture (5), emboîtée et fixée sur la paroi concave (3), la pièce de couverture (5) étant réalisée dans une mousse prévue pour assurer une isolation acoustique.

16. Pare-boue suivant les revendications 13 et 15 prises ensemble, **caractérisé en ce que** la pièce de couverture (5) est en appui sur les pointes coniques (23).

17. Pare-boue suivant l'une quelconque des revendications 11 à 16, **caractérisé en ce que** la paroi concave (3) est réalisée en matière plastique.

18. Pare-boue suivant l'une quelconque des revendications 11 à 17, **caractérisé en ce que** la plus grande dimension des micro-perforations est comprise entre 100 et 200 µm.
